# EUROPEAN PATENT APPLICATION

(11) **EP 4 663 011 A1**
(43) Date of publication of application: **17.12.2025**
(21) Application number: 25181102.2
(22) Date of filing: 05.06.2025
(51) Int. Cl.: A01J 5/017, A01J 7/00

(54) **SUPPORT ARM FOR SUPPORTING A MILK HOSE IN A MILKING DEVICE, MILKING DEVICE AND MILKING PARLOUR WITH SUCH SUPPORT ARM AND ASSOCIATED METHOD FOR MILKING**

(30) Priority: 10.06.2024 NL 2037919
(71) Applicant: BouMatic Technology B.V., 8304 AX Emmeloord (NL)
(72) Inventor: Kerkdijk, Gerard Jan, 8304 AX Emmeloord (NL); Holsbeek, Wout Hubertus, 8304 AX Emmeloord (NL); Slager, Jan, 8304 AX Emmeloord (NL)
(74) Representative: Arnold & Siedsma

(57) **Abstract**

The present invention relates to a support arm (20) for supporting a milk hose (10) in a milking device, a milking device and a milking parlour with such support arm and associated method for milking. The support arm (20) comprises:
- an arm (26) having a first arm end (32) and a second arm end (34), and a hinge (28) configured for enabling rotation of the arm around an arm axis at or close to the first arm end;
- a counter element (60) that is attached to the arm at or close to the first arm end and is configured for providing a counter force for balancing the support arm; and
- a hose guide (38) that is attached to the arm at or close to the second arm end and is configured for guiding one or more milk hoses,
wherein the arm comprises a guide hinge (40) configured for enabling rotation of the hose guide relative to the arm.

## Description

The present invention relates to a support arm for supporting milk hoses in a milking device for milking an animal. Such milking devices are known in practice and typically comprise a so-called milking claw to which teat cups are connected. Such assembly is also referred to as a milking cluster. In the milking process, the collected milk is transferred from the milking cluster with teat cups and milking claw to the milking device and milking tank with use of a milk hose.

A problem with conventional milking devices is the handling of the milk hoses. This handling is done by the milker. A correct positioning of the milk hose is required to enable an optimal position of the milking cluster, and achieve an optimal milking operation which results in a better milk quality and udder health. This handling/maneuvering of the milk hoses by the milker can be heavy and may require many manual operations, while the milker already must perform many operations in the milking process.

In practice, support(s) is/are provided to support the milk hoses to render maneuvering easier and faster when bringing the milking cluster in the correct position.

One of the problems with such conventional solutions is that it needs extra handling of the milker, and it does not follow the cow when she is moving during the milking operation. Also, any undesired bending and/or twisting of hoses may result in higher flow resistances and possibly quality reduction of the milk.

Therefore, it is an object of the present invention to obviate or at least reduce one or more of the above-stated problems and to provide an effective support for milk hoses in a milking device the preferably maintains an optimal milk quality and/or udder health.

This object is achieved with a support arm for supporting milk hoses in a milking device according to the present invention, wherein the support arm comprises:
- an arm having a first arm end and a second arm end, and a hinge configured for enabling rotation of the arm around an arm axis at or close to the first arm end;
- a counter element that is attached to the arm at or close to the first arm end and is configured for providing a counter force for balancing the support arm; and
- a hose guide that is attached to the arm at or close to the second arm end and is configured for guiding one or more milk hoses,
wherein the arm comprises a guide hinge configured for enabling rotation of the hose guide relative to the arm.

The support arm supports one (or more) milk hose(s) in a milking device using an arm and a hinge that enables a rotational movement of the arm around an arm axis. Preferably, this arm axis extends in a substantially horizontal direction.

The support arm according to the invention further comprises a counter element. Providing such counter element at or close to first arm end, and further also providing a hose guide for guiding one or more milk hoses at a second arm end of the support arm, the support arm can be balanced in weight. Therefore, the support arm according to the present invention brings the weight of the milk hose in balance. The balancing is preferably done for the support arm with at least one milk hose. This balancing renders maneuvering of the support arm and the associated milk hose easier for a milker.

According to the invention the arm further comprises a guide hinge configured for enabling rotation of the hose guide relative to the arm. This reduces the risk of twisting and/or bending of a milk hose. **In** fact, enabling a separate rotation of the hose guide relative to the arm provides additional freedom of movement to the milk hose(s) while being supported by the support arm. In addition, the maneuvering of the support arm and the associated milk hose is rendered even easier for a milker. Also, the udder health is better.

**In** a presently preferred embodiment, the arm axis extends in a substantially horizontal direction. Preferably, the guide hinge enables rotation of the hose guide around a guide axis, wherein the guide axis preferably extends in a substantially horizontal direction. Even more preferably, both the arm axis and the guide axis extend substantially parallel, preferably in a substantially horizontal direction. Such embodiment, wherein the guide hinge comprises a guide hinge axis, and wherein the arm axis and the guide hinge axis extend substantially parallel and preferably extend in a substantially horizontal direction, provides support for the milk hose(s). More specifically, such a configuration of guide axis and arm axis provides a good support for the milk hose(s) and minimizes the risk of twisting and/or bending of the milk hose such that milk quality can be maintained. In addition, or alternatively, one or both of the hinges may comprise ball joints, thereby enabling rotation in more than one direction to further increase the freedom of movement of the milk hose relative to the support arm of while being maneuvered in the milking process.

In a preferred embodiment of the invention the hose guide comprises a hose passage support.

The hose passage support of the hose guide allows for passage of the milk hose while providing support to the hose. Preferably, the hose passage support is configured such that the milk hose can rotate around its hose axis that extends along the length of the milk hose and preferably corresponds to the center line of the milk hose. Providing the milk hose with effective support while being capable of rotating around its hose axis prevents undesired bending or twisting of the milk hose thereby better maintaining the correct position of the milk hose.

The hose passage support preferably supports the milk hose over a certain length of the hose. Preferably, this support is over a relatively short length of the milk hose to prevent unnecessary fixation of the hose such that undesired hose twisting is prevented. This relatively short length may relate to a length in the range of 3 cm to 40 cm, more preferably in the length of 4 cm to 30 cm, and is most preferably in the range of 5 cm to 15 cm.

Optionally, support of the milk hose(s) is over at least a part of the hose circumference. **In a** presently preferred embodiment of the invention, the hose passage support is a circular element that is capable of supporting the milk hose(s) over substantially the entire hose circumference, while preferably allowing for rotation of the milk hose around its hose axis. **It** will be understood that the circular element relates to a support element that defines a circular passage opening for receiving a milk hose.

In a further preferred embodiment of the invention, the counter element comprises a spring element.

The counter element provides a counter force to enable easy manoeuvring of the support arm. Providing a spring element significantly reduces the required mounting space as compared to an alternative embodiment using a counter mass, for example. This is especially relevant when mounting the support arm in existing milking parlours having a milking pit wherein the parts which are mounted under a pit edge may hinder movement of the counter element and/or support arm.

In one of the presently preferred embodiments of the invention, the spring element is a torsion spring. Such torsion spring is preferably embodied as a type of flat spiral spring, and is capable of providing a counterforce requiring a minimal mounting space. A further advantage of using such spring type is the robustness in the provision of the counterforce over time, so that a stable operation can be guaranteed.

In a further preferred embodiment, the spring element comprises a force adjustor configured for adjusting the counterforce.

In case the counterforce needs adaptation, the force adjustor may adjust the counterforce accordingly. Such change can be required when new milking device parts are installed and/or when due to ageing of parts the required counterforce changes. To adjust the counterforce and select the desired or required counterforce, in a presently preferred embodiment the force adjustor comprises a button that enables a release and a connection of the spring element with the arm, preferably involving setting the spring element at a correct tooth or teeth of the teethed adjustor guide. Tests have shown that such an embodiment is capable of providing an adjustable and robust counterforce.

It will be understood that alternative configurations of the spring element can also be envisaged in accordance with the present invention. In addition, or as an alternative, the aforementioned spring element can also be applied to a conventional milk hose support, so without necessarily having a hose guide that is attached to the arm at or close to the second arm end and is configured for guiding one or more milk hoses. Also, the spring element can be applied to a support that does comprises a hose guide, however, that does not necessarily comprise a guide hinge configured for enabling rotation of the hose guide relative to the arm. This provides the same or similar effects and advantages as described earlier in relation to the spring element, and the optional combination with the further features of the spring element, such as the torsion spring and/or force adjustor.

In a further preferred embodiment of the invention, the support arm further comprises an arm length adjustor.

By enabling an arm length adjustment with the arm length adjustor, the length of the arm support arm can be adapted to the specific circumstances wherein the support arm will be used. This renders the support arm flexible in its operation. This is especially advantageous in implementing the support arm in one of the embodiments according to the present invention in different types of milking devices and milking parlours.

In a further preferred embodiment of the present invention the hose guide of the support arm comprises a guide connector that is configured to connect the hose guide to a side of the arm.

One of the advantages of having a guide connector that can connect the hose guide to a side of the arm is that the supported milk hose is not hindered by the arm itself and may extend aside the arm, thereby further reducing the risk of hose twisting or hose bending.

In a further preferred embodiment, the hose guide has a symmetrical shape. This enables mounting the hose guide on either side of the arm, so either the left side or right side of the arm, to provide a more flexible and modular mounting possibility for the hose guide to the arm of the support arm. This results in a modular support arm that can be used in a wide range of milking devices and/or milking parlours.

In a further preferred embodiment of the present invention, the support arm further comprises an insert configured to adapt the hose guide to the milk hose type.

Providing such an insert changes the dimensions (and shape) of the hose passage that is preferably provided by the hose passage support and adapts this passage to the milk hose type that requires support. This provides a flexible and modular configuration of the hose guide and support arm such that effective and cost-efficient support is made possible.

In a further preferred embodiment of the present invention, the support arm further comprises a locking mechanism that is configured for locking the position of the milk hose relative to the hose guide.

Providing a locking mechanism enables locking and/or unlocking the position of the milk hose relative to the hose guide. This enables adapting the length of the hose between the milk claw and the support arm in view of the specific circumstances in the milking operation. This further improves the overall flexibility of the support arm.

In one of the presently preferred embodiments the locking mechanism is provided with a releaser configured for temporarily and/or permanently releasing the locking of the position of the milk hose relative to the hose guide. This locking mechanism of the invention comprises a clip or button that can engage the milk hose fixating it relative to the hose guide. Such clip or button may function as releaser. In such an embodiment, pushing the clip or button temporarily releases this fixation and engagement such that the milk hose can be repositioned relative to the hose guide. This enables adaptation of the length between the hose guide and the milking claw. Preferably, the milk hose remains capable of rotating around its centreline, while movement of the milk hose in the direction of its centreline (length direction of the milk hose) is prevented. Tests have shown that this provides an effective means to adapt the milk hose length.

The invention further relates to a milking device and/or a milking parlour that is provided with a support arm according to any of the above-described embodiments according to the present invention.

The milking device and/or milking parlour provides similar advantages and effects as described in relation to the support arm.

The invention further also relates to a method for milking an animal wherein the method comprises the steps of:
- providing a support arm for a milking device and/or milking parlour according to an embodiment of the present invention;
- supporting one or more milk hoses with the support arm;
- arranging the teat cups on teats of the animal for milking; and
- milking the animal.

The method provides similar advantages and effects as described in relation to the support arm, milking device and/or milking parlour.

In some embodiments according to the invention the method may comprise further steps such as adjusting the length of the hose relative to the hose guide. This may involve the use of the locking mechanism as described in relation to the support arm. Also further steps can be considered, such as one or more of adapting the hose guide using an insert, providing a symmetrical shape to the hose guide, adjusting the arm length, adjusting the counter force, and providing the respective elements of the support arm.

In further embodiment, the method may comprise the step of rotating the arm around an arm axis and providing the guide hinge with a guide hinge axis to enable rotating the guide relative to the arm, and wherein the arm axis and the guide hinge axis preferably extend substantially parallel and more preferably extend in a substantially horizontal direction. This provides a good support for the milk hose(s) and minimizes the risk of twisting and/or bending of the milk hose such that milk quality can be maintained.

Further advantages, features and details of the invention are elucidated on the basis of preferred embodiments thereof, wherein reference is made to the accompanying drawings, in which:
- Figure 1 shows a support arm with milk hose being used in a milking operation;
- Figure 2 shows the support arm of figure 1; and
- Figures 3 and 4 show the support arm of figures 1 and 2 in different views.

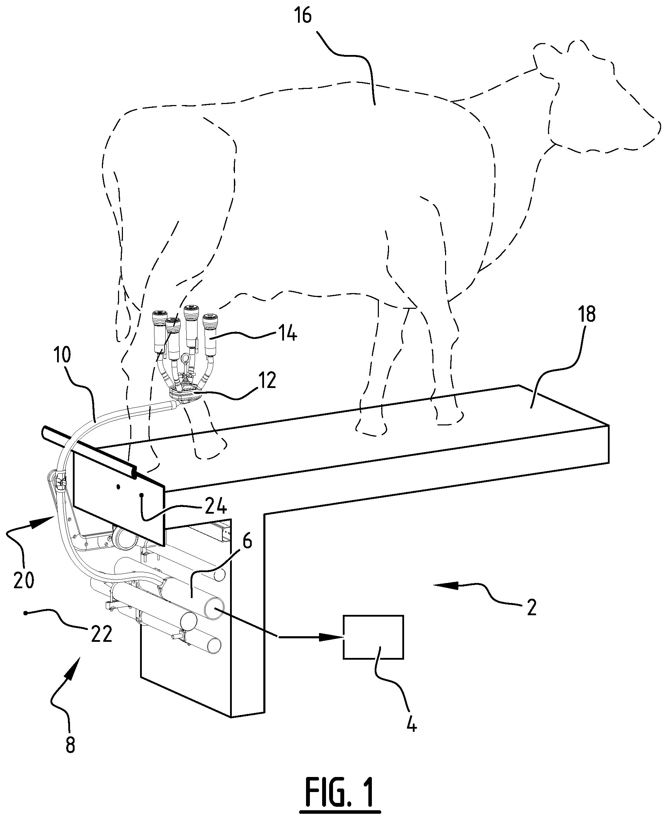

Milking device 2 (figure 1) comprises milk tank 4 and piping 6 which have been schematically illustrated in the figure as part of milking parlour 8. Milk hose 10 extends from piping 6 to milk claw 12. Milk hose 10 has hose center line 11. Teat cups 14 are connected to milk claw 12. Teat cups 14 are operational when milking cow 16 is positioned on floor 18 of milking parlour 8 in a milking operation.

Support arm 20 is used to support milk hose 10. In the illustrated embodiment support arm 20 is provided in milk pit 22 and may extend around edge 24 above floor 18 when supporting milk hose 10 in a milking operation.

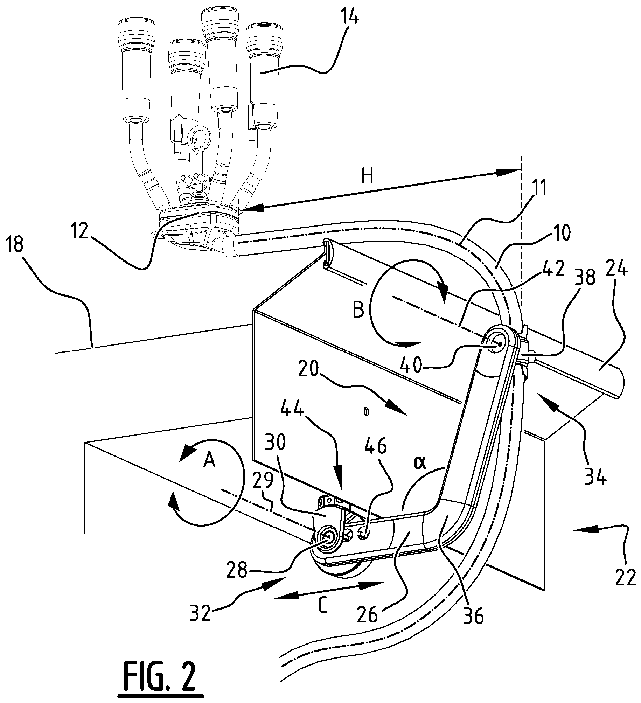

Support arm 20 (figure 2) comprises arm 26 that is hingedly connected to hinge 28, whereby hinge 28 is mounted to floor 18 with connector 30. In the illustrated embodiment, connector 30 is mounted on hinge axis 29, wherein connector 30 is mounted to pit edge 24 and/or underside of the milk stand. In the illustrated embodiment hinge 28 defines hinge axis 29. Hinge 28 enables rotation of arm 26 in direction A.

In this illustrated embodiment, arm 26 has first arm end 32 and second arm end 34. Arm 26 extends between first arm end 32 and second arm end 34 and comprises bend 36 defining angle α between the parts of arm 26. In the illustrated embodiment angle α is preferably in the range of 90° to 180°, more preferably in the range of 100° to 145°.

Hose guide 38 is provided at second arm end 34 and is connected with guide hinge 40 to second arm end 34. Guide hinge 40 defines guide hinge axis 42 around which hose guide 38 may rotate in direction B.

In the illustrated embodiment support arm 20 further comprises optional arm length adjustor 44, which in the illustrated embodiment comprises a number of openings 46 for mounting connector 30 with hinge 28 to first arm end 32 of arm 26 of support arm 20, such that the length of arm 26 can be adapted to the specific circumstances. Arm length adjustor 44 enables movement of the arm 26 in direction C.

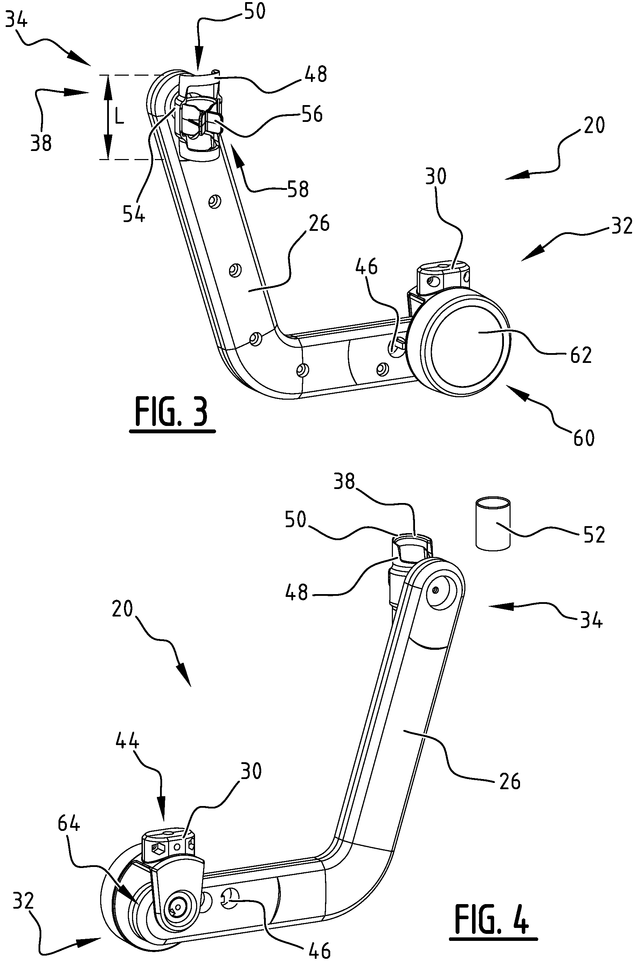

Hose guide 38 comprises hose passage support 48 defining hose passage 50 (figures 3 and 4). In the illustrated embodiment, hose passage 50 is defined by the circumferential edge of hose passage support 48. In this presently preferred embodiment, hose passage support 48 is capable of supporting the entire circumference of milk hose 10. It will be understood that other configurations for hose passage support 48 can also be envisaged in accordance with the present invention. Furthermore, hose passage 50 can be adapted to a specific milk hose 10 using one or more inserts 52, which is schematically illustrated in figure 4. Hose guide 38 is connected to second arm end 34 with guide connector 54.

In the illustrated embodiment, hose guide 38 comprises locking mechanism 56 having button or clip 58 that is capable of fixating milk hose 10 at a specific position relative to hose guide 38. In the illustrated embodiment, button or clip 58 also functions as releasor to enable temporarily and/or permanently releasing the locking of the position of milk hose 10 relative to hose guide 38. Hose guide 38 with hose passage support 48 supports milk hose 10 over length L, which in the illustrated embodiment is in the range of 5 cm to 30 cm, and more preferably in the range of 10 cm to 20 cm. Locking mechanism 56 is capable fixating/locking and releasing milk hose 10 relative to hose guide 38. At first arm end 32, spring element 60 is provided as counter element. In the illustrated embodiment spring element 60 is a so-called flat spiral spring. Spring button 62 enables counterforce adjustment by engaging the respective teeth of teethed adjusted guide 64.

When starting a milking operation, milking claw 12 with teat cups 14 is moved from a rest position to a position of use, wherein teat cups 14 are connected to the teat of cow 16. This involves movement of milk hose 10.

According to an illustrated embodiment of the present invention, support arm 20 is moved in direction A to guide and support movement of milk hose 10. To reduce the risk of twisting and/or bending of milk hose 10, hose guide 38 rotates in direction B around guide axis 42. Preferably, hinge axis 29 and guide axis 42 extend substantially parallel in a substantially horizontal direction. It will be understood that, before use, arm 26 is positioned correctly in direction C. Hose length H between hose guide 38 and milking claw 12 is also set before the actual milk operation starts using locking mechanism 56. Counter element/spring element 60 provides a counterforce such that movement of support arm 20 with milk hose 10 is relatively easy and effective. The spring force can be manipulated using force adjustor 62. The counterforce is preferably set taken into account the characteristics of milk hose 10 and the respective parts of support arm 20. Support arm 20 enables a smooth guidance of milk hose 10 such that milk hose 10 is confronted with minimal bending and/or twisting, such that the milk that is collected in the milking operation is smoothly transferred to milk tank 4 and the milk quality is optimally maintained.

The present invention is by no means limited to the above described preferred embodiments thereof. The rights sought are defined by the following claims within the scope of which many modifications can be envisaged.

## Claims

1. Support arm for supporting one or more milk hoses in a milking device, the support arm comprising:
- an arm having a first arm end and a second arm end, and a hinge configured for enabling rotation of the arm around an arm axis at or close to the first arm end;
- a counter element that is attached to the arm at or close to the first arm end and is configured for providing a counter force for balancing the support arm; and
- a hose guide that is attached to the arm at or close to the second arm end and is configured for guiding one or more milk hoses,
wherein the arm comprises a guide hinge configured for enabling rotation of the hose guide relative to the arm.

2. Support arm according to claim 1, wherein the hose guide comprises a hose passage support.

3. Support arm according to the foregoing claim, wherein the hose passage support is a circular element.

4. Support arm according to any of the foregoing claims, wherein the counter element comprises a spring element.

5. Support arm according to the foregoing claim, wherein the spring element is a torsion spring and/or wherein the spring element comprises a force adjustor configured for adjusting the counter force.

6. Support arm according to any of the foregoing claims, wherein the arm axis extends in a substantially horizontal direction, and wherein the guide hinge comprises a guide hinge axis, and wherein the arm axis and the guide hinge axis preferably extend substantially parallel.

7. Support arm according to any of the foregoing claims, further comprising an arm length adjustor.

8. Support arm according to any of the foregoing claims, wherein the hose guide comprises a guide connector configured to connect the hose guide to a side of the arm.

9. Support arm according to the foregoing claim, wherein the hose guide has a symmetrical shape.

10. Support arm according to any of the foregoing claims, further comprising an insert configured to adapt the hose guide to the milk hose type.

11. Support arm according to any of the foregoing claims, further comprising a locking mechanism configured for locking the position of the milk hose relative to the hose guide, wherein the locking mechanism is preferably provided with a releaser configured for temporarily and/or permanently releasing the locking of the position of the milk hose relative to the hose guide.

12. Milking device comprising a support arm according to any of the foregoing claims.

13. Milking parlour provided with a milking device according to the foregoing claim.

14. Method for milking an animal, comprising of:
- providing a support arm, milking device and/or milking parlour according to any one of the foregoing claims;
- supporting one or more milk hoses with the support arm;
- arranging the teat cups on teats of the animal for milking; and
- milking the animal.

15. Method according to the foregoing claim, further comprising the step of adjusting the length of the hose relative to the hose guide and/or rotating the arm around an arm axis and providing the guide hinge with a guide hinge axis to enable rotating the guide relative to the arm, and wherein the arm axis and the guide hinge axis preferably extend substantially parallel and more preferably extend in a substantially horizontal direction.
